# EUROPÄISCHE PATENTSCHRIFT

(11) **EP 1 218 467 B1**
(45) Veröffentlichungstag und Bekanntmachung des Hinweises auf die Patenterteilung: **24.10.2007**
(21) Anmeldenummer: 00967645.3
(22) Anmeldetag: 01.09.2000
(51) Int. Cl.: C09K 9/02, G02F 1/01, A01G 9/14

(54) **VERFAHREN ZUR HERSTELLUNG VON THERMOTROPEN GEWÄCHSHAUSFOLIEN**
METHOD FOR THE PREPARATION OF THERMOTROPIC GREENHOUSE FILMS
METHOD POUR LA PREPARATION DES FILMS THERMOTROPES POUR SERRES

(30) Priorität: 09.09.1999 DE 19943169
(43) Veröffentlichungstag der Anmeldung: 03.07.2002
(73) Patentinhaber: BASF Aktiengesellschaft, 67056 Ludwigshafen (DE)
(72) Erfinder: JAHNS, Ekkehard, 69469 Weinheim (DE); KÜHN, Ingolf, 99891 Schmerbach (DE); LIESE-SAUER, Thomas, 67454 Hassloch (DE); ABICHT, Wolfgang, 67229 Grosskarlbach (DE)
(74) Vertreter: Isenbruck, Günter
(86) Internationale Anmeldenummer: PCT/EP2000/008594
(87) Internationale Veröffentlichungsnummer: WO 2001/018148

(56) Entgegenhaltungen:
- EP-A- 0 451 809
- EP-A- 0 559 113
- EP-A- 0 611 803
- WO-A-95/24453
- DE-A- 3 436 477

## Beschreibung

Die Erfindung betrifft ein Verfahren zur Herstellung thermotroper Folien und Folienverbunde.

Es ist bekannt, zur Regulierung der durch Lichteinfall induzierten Wärmeentwicklung Wärmeschutzverglasungen aus Materialien mit reversibel temperaturabhängiger Transparenz einzusetzen.

Aus DE-A 34 36 477 sind Verglasungssysteme mit temperaturgesteuerter Lichtdurchlässigkeit bekannt, die eine Polymermischung aus zwei verschiedenen Polymerkomponenten aufweisen, wobei die Mischung eine untere kritische Lösungstemperatur (auch als untere kritische Entmischungstemperatur oder Trübungstemperatur zu bezeichnen) besitzt. Unterhalb dieser Temperatur liegt eine einphasige, transparente Polymermischung vor, während oberhalb dieser Temperatur Entmischung zu den Polymerkomponenten erfolgt. Die eingesetzten Polymerkomponenten weisen unterschiedliche Brechungsindices auf, so daß die Entmischung mit einer Trübung des Materials einhergeht. Die Polymermischungen werden bevorzugt in Verbindung mit einer Trägergrundlage (Trägerschicht) und einer Abdeckung (Deckschicht) aus Silikatglas oder einem transparenten Kunststoff eingesetzt, wobei die Verarbeitung vorzugsweise durch Coextrusion der thermotropen Polymermischung mit der Trägerschicht und der Deckschicht erfolgt. Als geeignete thermotrope Polymermischungen werden die Systeme Polystyrol/Polyvinylmethylether, Mischungen von Ethylen/Vinylacetat-Copolymer, Butylacrylat oder PMMA mit chloriertem Polyethylen sowie von Poly-n-hexylmethacrylat, Poly-n-butylacrylat oder Poly-n-propylacrylat mit PVC genannt. Die genannten Polymermischungen weisen zum Teil hohe Trübungstemperaturen auf.

In DE-A 44 08 156 sind strahlungsinduziert vernetzte Polymermischungen mit reversibler Strahlungstransmission beschrieben. Als bevorzugt eingesetzte Polymerkomponenten nennt die Schrift Copolymere aus (Meth)acrylatmonomeren und Styrol als erste Polymerkomponente und Polyethylenoxid, Polypropylenoxid, Polytetrahydrofuran und Polyvinylmethylether als zweite Polymerkomponente. Die Vernetzung wird durch eingemischte Photoinitiatoren oder durch einpolymerisierte Photoinitiator-Copolymere bewirkt. Als mögliche Anwendungen werden Verglasungssysteme wie Fenster für Gebäude, Wintergärten oder Gewächshäuser genannt. Zur Verarbeitung werden die Polymermischungen in einem Lösungsmittel gelöst, auf eine Glasplatte, Kunststoffplatte oder Kunststoffolie aufgebracht, getrocknet und bestrahlt.

Als Alternative zu Glas- oder Kunststoffscheiben mit einer thermotropen Beschichtung bieten sich Folienverbunde aus einer thermotropen Polymerfolie und transparenten Hüllfolien an. Solche Folienverbunde können als Landwirtschaftsfolien, beispielsweise als Abdeckfolien, oder als Gewächshausfolien eingesetzt werden. Folienverbunde werden üblicherweise durch Coextrusion der einzelnen Folienschichten hergestellt. Dazu werden die Polymere bzw. Polymermischungen, welche die verschiedenen Folienschichten bilden, im Extruder aufgeschmolzen und gemeinsam durch eine Mehrschlitzdüse extrudiert. Beim sogenannten Folienblasen werden die Polymere durch eine Düse mit Ringspalt ausgetragen und der Folienschlauch nach oben abgezogen. In die Mitte des Folienschlauchs wird Druckluft aufgegeben. Dabei weitet sich der Folienschlauch auf und erstarrt.

Bei der Verarbeitung thermotroper Polymermischungen durch Extrusion besteht das Problem, daß einzelne Polymerkomponenten zum Teil hohe Schmelzpunkte aufweisen. Liegt die Verarbeitungstemperatur oberhalb der Trübungstemperatur der Polymermischung, wird keine homogene Mischung erhalten mit der Folge, daß die Trübung der Mischung irreversibel ist. Hinzu kommt, daß die eingesetzten Polymerkomponenten bei der Verarbeitungstemperatur häufig stark unterschiedliche Viskositäten aufweisen, was ihre Verarbeitung im Extruder erschwert.

Beispielsweise weisen Styrolcopolymere eine Schmelztemperatur oberhalb 100°C auf, während Polypropylenoxid bereits bei Raumtemperatur flüssig ist. Schmilzt man ein Styrolcopolymer in einem Extruder oberhalb 100°C auf und versucht, Polypropylenoxid bei dieser Temperatur einzumischen, so erhält man keine homogene Mischung, da diese Verarbeitungstemperatur höher liegt als die Entmischungstemperatur der gewünschten Polymermischung. Der große Viskositätsunterschied der beiden Komponenten erschwert das Mischen zusätzlich.

Aufgabe der Erfindung ist es, ein Verfahren zur Herstellung thermotroper Folien durch Extrusion thermotroper Polymermischungen bzw. zur Herstellung von Folienverbunden durch Coextrusion der Polymermischungen gemeinsam mit transparenten Träger- und Deckschichten bereitzustellen.

Gelöst wird die Aufgabe durch ein Verfahren zur Herstellung thermotroper Folien oder Folienverbunde, enthaltend mindestens eine thermotrope Schicht, die gebildet wird aus
a) 5 bis 95 Gew.-% eines Polymeren als Komponente A,
b) 5 bis 95 Gew.-% eines von A verschiedenen Polymeren mit kleinerem Brechungsindex als Komponente B, wobei eine molekulare Mischung der Komponenten A und B eine Trübungstemperatur besitzt, unterhalb derer eine einphasige, transparente Mischung vorliegt und oberhalb derer Entmischung zu den Komponenten A und B stattfindet,
   wobei die Komponenten A und/oder B jeweils bis zu 15 Mol-% Photoinitiator-Comonomere einpolymerisiert enthalten können,
   und gegebenenfalls
c) 0 bis 10 Gew.-% eines monomeren Photoinitiators als Komponente C,
d) 0 bis 20 Gew.-% eines reaktiven Vernetzers als Komponente D
   und/oder
e) 0 bis 20 Gew.-% üblichen Zusatzstoffen wie Weichmacher, Farbstoffe, Pigmente, Stabilisatoren, Verarbeitungshilfsmittel und Rheologieadditive als Komponente E,
und gegebenenfalls eine Trägerschicht und/oder eine Deckschicht sowie gegebenenfalls zusätzliche Zwischenschichten,
mit den Schritten:
i) Herstellen einer innigen Mischung enthaltend
   10 bis 98 Gew.-% einer Mischung der Komponenten A, B und gegebenenfalls C und/oder E
   und
   2 bis 90 Gew.-% eines Lösungsmittels, in dem zumindest die Komponenten A und B löslich sind,
ii) Entfernung des Lösungsmittels, wobei eine innige Polymermischung aus den Komponenten A und B und gegebenenfalls C und/oder E gebildet wird,
iii) Aufschmelzen der innigen Polymermischung aus Schritt (ii) während oder nach der Entfernung des Lösungsmittels,
iv) gegebenenfalls Zugabe der Komponenten C und/oder D und/oder E zu einem beliebigen Zeitpunkt,
v) Formung der Mischung aus den Komponenten A, B und gegebenenfalls C, D und/oder E zu einer thermotropen (Mono-)Folie oder gemeinsam mit der Trägerschicht und/oder der Deckschicht und gegebenenfalls der zusätzlichen Zwischenschichten zu einem thermotropen Folienverbund, und
vi) gegebenenfalls UV-Vernetzung der thermotropen Folie od er des thermotropen Folienverbunds.

Die mit dem erfindungsgemäßen Verfahren hergestellten thermotropen Folien oder Folienverbunde enthalten mindestens eine thermotrope Schicht aus a) 5 bis 95 Gew.-%, bevorzugt 20 bis 80 Gew.-%, besonders bevorzugt 30 bis 70 Gew.-% eines Polymeren als Komponente A und b) 5 bis 95 Gew.-%, bevorzugt 20 bis 80 Gew.-%, besonders bevorzugt 70 bis 30 Gew.-% eines von A verschiedenen Polymeren mit kleinerem Brechungsindex als A als Komponente B, wobei eine molekulare Mischung der Komponenten A und B eine Trübungstemperatur besitzt, unterhalb derer eine einphasige, transparente Mischung vorliegt und oberhalb derer Entmischung zu den Komponenten A und B stattfindet, wobei vorzugsweise die molekulare Mischung der Komponenten A und B eine Trübungstemperatur < 150 °C aufweist und vorzugsweise der Brechungsindexunterschied der Komponenten A und B > 0,01, besonders bevorzugt > 0,03 ist.

Als Komponente A bevorzugte Polymere sind solche, die eine spezifische Wechselwirkung zu den Polymeren der Komponente B ausbilden können. Spezifische Wechselwirkungen können beispielsweise durch Salzbildung, Wasserstoffbrückenbindungen, Komplexbildung, pi-Elektronenwechselwirkung, insbesondere bei Vorliegen aromatischer Strukturen, oder durch dipolare Wechselwirkungen ausgebildet werden. Die Polymere der Komponente A weisen im Vergleich zu den Polymeren der Komponente B einen großen Berechungsindex auf. Ein großer Brechungsindex läßt sich typischerweise durch den Einbau cyclischer Struktureinheiten in die Polymere der Komponente A erreichen. Daher weisen als Komponente A bevorzugte Polymere wiederkehrende cyclische Struktureinheiten auf, wobei die cyclischen Struktureinheiten ausgewählt sind aus der Gruppe bestehend aus carbocyclischen oder heterocyclischen gesättigten oder ungesättigten nicht-aromatischen cyclischen Struktureinheiten und carbocyclischen oder heterocyclischen mono- oder polycyclischen aromatischen Struktureinheiten, wobei das Polymere spezifische Wechselwirkungen zu den Polymeren der Komponente B ausbilden kann. Beispiele für cyclische Struktureinheiten sind Phenylen-, Naphthylen-, Stryrolidondiyl-, Pyridindiyl-, Pyrroldiyl- und Thiophendiyl-Eineiten.

Als Komponente A besonders bevorzugte Polymere sind solche mit aromatischen wiederkehrenden Struktureinheiten, insbesondere solche mit Phenylen- oder Naphtyleneinheiten. Beispiele für besonders bevorzugte Polymere der Komponente A sind Copolymere des Styrols mit (Meth)acrylaten, die eine spezifische Wechselwirkung mit den Polymeren B eingehen können, wie Copolymere aus Styrol und p-Hydroxystyrol, Styrol und Hydroxyethyl(meth)acrylat, Hydroxypropyl(meth)acrylat, Butandiolmono(meth)-acrylat, Hexandiolmono(meth)acrylat, Dimethylaminoethyl(meth)acrylat, (Meth)acrylsäure, (Meth)acrylamid oder (Meth)acrylnitril. Weiterhin können Copolymere aus (Meth)acrylaten wie zum Beispiel aus Phenoxyethylmethacrylat oder Benzylmethacrylat mit Hydroxyalkyl(meth)acrylaten eingesetzt werden. Ganz besonders bevorzugt sind molekular einheitliche Copolymere aus Styrol und Hydroxyethylmethacrylat und gegebenenfalls (Meth)acrylsäure und (Meth)acrylnitril.

Als Komponente B bevorzugte Polymere sind solche, die mit den Polymeren der Komponente A die oben genannten spezifischen Wechselwirkungen eingehen können. Die Polymere der Komponente B weisen einen niedrigen Brechungsindex, im Vergleich zum Brechungsindex der Polymere der Komponente A, auf. Niedrige Brechungsindices zeigen im allgemeinen Polymere ohne cyclische Struktureinheiten, einem geringen Anteil an Doppelbindungen sowie einem hohen Anteil an Alkylketten. Bevorzugte Polymere der Komponente B sind Poly(meth)acrylsäurealkylester mit 1-20 C-Atomen im Alkylrest, Poly-C₁-C₂₀-Alkylvinylether, Polyvinylether mit C₁-C₆ Alkylenoxid-Seitenketten und Polyalkylenoxide.

Beispiele sind Polyethylenoxid, Polypropylenoxid, Polybutylenoxid, Polytetrahydrofuran sowie Copolymere der genannten Polyalkylenoxide. Besonders bevorzugt sind Copolymere des Propylenoxids und Butylenoxids. Letztere ergeben besonders transparente Polymermischungen.

Die Komponenten A und B können aus jeweils einem oder mehreren der genannten Polymere bestehen.

Durch die Veränderung des relativen Gehalts der einzelnen Comonomeren (wechselwirkende Gruppen) in einem Copolymeren ist es möglich, die kritische Trübungstemperatur auf einen gewünschten Wert einzustellen.

Der relative Gehalt der Comonomeren ist nicht kritisch. Er liegt üblicherweise im Bereich von 0,1 bis 50 mol-%, vorzugsweise von 0,5 bis 25 mol-%.

Das Molekulargewicht Mₙ (Zahlenmittelwert) der Polymeren A oder B ist an sich unkritisch, liegt aber im allgemeinen im Bereich von 500 bis 1 000 000, vorzugsweise von 1000 bis 500 000.

Das Mischungsverhältnis der Polymeren A oder B richtet sich nach der gewünschten Trübungstemperatur und kann insofern frei gewählt werden. Im allgemeinen liegen die Mischungsverhältnisse A:B im Bereich von 5:95 bis 95:5, vorzugsweise von 20:80 bis 80:20 Gew.-%.

Die Herstellung der Polymeren A und B kann mit den hierfür bekannten Herstellverfahren erfolgen, beispielsweise durch Massepolymerisation, Lösungspolymerisation, Suspensionspolymerisation, Dispersionspolymerisation oder Emulsionspolymerisation. Wenn sich die relativen Reaktivitäten der Comonomeren bei der Herstellung von Copolymeren stark unterscheiden, kann es bei einigen Herstellverfahren dieser Polymeren zu einer uneinheitlichen Verteilung der Comonomeren in den Polymerketten kommen, welches zu Problemen bei der Verträglichkeit der Polymermischungen führen kann. Diesem Nachteil kann dadurch abgeholfen werden, daß man beispielsweise die Polymerisationsreaktion bei geringem Monomerumsatz abbricht, zum Beispiel nach 10 bis 20 Gew.-% Monomerumsatz.

Vorzugsweise beträgt die Trübungstemperatur der thermotropen Polymermischung 20 bis 120°C, besonders bevorzugt 20 bis 70°C. Die Trübungstemperatur kann durch die Wahl des Comonomergehalts der Komponente A, die für die spezifische Wechselwirkung mit der Komponente B verantwortlich ist, eingestellt werden. Vorzugsweise enthält die Komponente A 0,1 bis 30 Mol-% eines Comonomeren, welches zu der Komponente B Wasserstoffbrückenbindungen ausbilden kann.

Eine weitere Einflußgröße auf die Trübungstemperatur ist das Mischungsverhältnis der beiden Komponenten A und B. Vorzugsweise versucht man ein Mischungsverhältnis zwischen 70:30 bis 30:70 einzustellen, da in diesem Bereich die Lichtstreuung der Polymermischung im entmischten Zustand besonders hoch ist. Andere Anforderungen, wie beispielsweise mechanische Anforderungen oder auch Aspekte der Verarbeitbarkeit können es jedoch notwendig machen, diesen Mischungsbereich zu verlassen.

Die Komponenten A und/oder B können jeweils bis zu 15 mol-%, bevorzugt 0,01 bis 15 mol-%, besonders bevorzugt 0,1 bis 12 mol-%, insbesondere 0,5 bis 10 mol-% Photoinitiator-Comonomere einpolymerisiert enthalten. Photoinitiator-Comonomere im Sinne der vorliegenden Erfindung sind beispielsweise Allylbenzoylbenzoat, (Meth)-acrylsäure-2-alkoxy-2-phenyl-2-benzoylethylester, (Meth)acroyloxyethylcarbo-natoacetophenon und (Meth)acroyloxybutylcarbo-natoaceto-phenon. Bevorzugt sind (Meth)-acroyloxybutylcarbonatobenzophenon, (Meth)acroyloxyethylcarbonatobenzophenon, (Meth)acroyloxypropylcarbonat-obenzophenon, insbesondere (Meth)acroyloxybutylcarbonatobenzophenon.

Die thermotrope Schicht kann bis zu 15 Gew.-%, bevorzugt 0,1 bis 15 Gew.-%, besonders bevorzugt 0,5 bis 10 Gew.-% eines monomeren Photoinitiators als Komponente C enthalten. Derartige Photoinitatoren sind dem Fachmann bekannt und im Handel erhältlich, zum Beispiel Benzophenon, Benzoin, Acetophenon, Benzildimethylketal, Dibenzoyldisulfid, O-Acyl-α-oximinoketone, S-Phenylthiobenzoate, Acylphosphinoxide, Dibenzoylmethane, Phenylazo-4-diphenylsulfon, 4-Morpholino-α-dialkylaminoacetophenon, Campferchinon, Fluorenone, α-Ketocumarine, Anthrachinone und Terephthalophenone.

Durch die einpolymerisierten Photoinitiator-Comonomere bzw. die monomeren Photoinitiatoren kann eine UV-Vernetzung der thermotropen Polymermischung erreicht werden. Durch Vernetzung kann ein stabiles Schaltverhalten der thermotropen Polymermischung erreicht werden. Ein stabiles Schaltverhalten der thermotropen Polymermischung liegt vor, wenn die reversible Entmischung bei einer ganz bestimmten, gleichbleibenden Temperatur eintritt.

Die thermotrope Schicht kann die monomeren Photoinitiatoren auch zusätzlich zu den einpolymerisierten Photoinitiator-Comonomeren enthalten. Vorzugsweise enthält die thermotrope Schicht entweder nur monomere Photoinitiatoren oder nur einpolymerisierte Photoinitiatoren.

In einer bevorzugten Ausführungsform der Erfindung enthält die thermotrope Schicht die Komponenten A und/oder B mit einpolymerisierten Photoinitiator-Copolymeren und nicht die Komponente C.

In einer weiteren bevorzugten Ausführungsform der Erfindung enthält die thermotrope Schicht die Komponenten A und B ohne einpolymerisierte Photoinitiator-Copolymere und ohne die Komponente C.

Die thermotrope Schicht kann bis zu 20 Gew.-%, bevorzugt 0,1 bis 10 Gew.-%, besonders bevorzugt 0,5 bis 5 Gew.-% eines reaktiven Vernetzers als Komponente D enthalten. Durch reaktive Vernetzung kann bei der Verarbeitung der thermotropen Polymermischung zu thermotropen Folienverbunden die Verarbeitungsviskosität der thermotropen Polymermischung der Verarbeitungsviskosität der übrigen Polymere des thermotropen Folienverbunds angepaßt werden. Durch reaktive Vernetzung kann, alternativ oder in Ergänzung zur UV-Vernetzung, ebenfalls ein stabiles Schaltverhalten der thermotropen Polymermischung erreicht werden.

Geeignete reaktive Vemetzer sind beispielsweise difunktionelle und polyfunktionelle Isocyanate sowie von diesen Verbindungen abgeleitete Carbodiimide. Insbesondere zu nennen sind Diisocyanate der allgemeinen Formel X(NCO)₂, wobei X für einen aliphatischen Kohlenwasserstoffrest oder einen cycloaliphatischen oder aromatischen Kohlenwasserstoffrest mit 6 bis 15 Kohlenstoffatomen steht. Beispiele derartiger Diisocyanate sind Tetramethyldiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocanatocyclohexyl)-propan, Trimethylhexandiisocyanat, 1,4-Diisocyanatobenzol, 2,4-Diisocyanatotoluol, 2,6-Diisocyanato toluol, 4,4'-Diisocyanatodiphenylmethan, 2,4'-Diisocyanatodiphenylmethan, p-Xylylendiisocyanat, Tetramethylxylylendiisocyanat (TMXDI), die Isomeren des Bis-(4-isocyanatocyclo-hexyl)methans (HMDI) wie das trans/trans-, das cis/cis- und das cis/trans-Isomere sowie aus diesen Verbindungen bestehende Gemische. Weiterhin geeignet sind Polyisocyanate, die Urethan-, Harnstoff-, Biuret-, Isocyanurat-, Uretdion-, Carbodiimid-, Allophanat-, Uretonimin- oder Oxydiaziontrion-Gruppen aufweisen. Diese Verbindungen können z.B. von den vorstehend genannten Diisocyanaten abgeleitet sein.

Neben den mehrfachfunktionellen Isocyanaten können als Vernetzer bevorzugt solche Verbindungen eingesetzt werden, die ein oder mehrere Carbodiimid-Gruppen enthalten. Carbodiimid-Gruppen sind in der Lage, bevorzugt mit Carbonsäurefunktionen zu reagieren. Diese Carbodiimid-Guppen enthaltenden Verbindungen können von den vorstehend genannten Di- und Polyisocyanaten abgeleitet sein. Darüber hinaus sind Carbodiimide, die sich aus Monoisocyanaten oder aus Gemischen von Mono- und höherfunktionellen Isocyanaten herstellen lassen, verwendbar. Bevorzugt sind die Carbodiimide des TMXDI (Tetramethylxylylendiisocyanat) zu nennen, vor allem die der allgemeinen Formel I:

OCN-(R¹-N=C=N)ₘ-R¹-NCO **(I)**

in der R¹ für einen zweiwertigen, gegebenenfalls Urethan-, Ester- und/oder Ethergruppen aufweisenden Kohlenwasserstoffrest, wie er durch Entfernung der Isocyanatgruppen aus einem einfachen organischen Isocyanat oder einem Urethangruppen und gegebenenfalls Ether- oder Estergruppen aufweisenden Präpolymer, das endständig Isocyanatgruppen trägt, erhalten wird, wobei bei Vorliegen von mehreren R¹ im gleichen Molekül gleichzeitig auch unterschiedliche, der genannten Definition entsprechende Reste R¹ vorliegen können und m für eine ganz oder (im statistischen Mittel) gebrochene Zahl von 1 bis 20, vorzugsweise von 2 bis 10, steht. Bevorzugt leiten sich die Reste R¹ durch Abstraktion der Isocyanatgruppen von Monomeren ab, bei denen es sich um die Diisocyanate handelt, die üblicherweise in der Polyurethanchemie eingesetzt werden.

Besonders bevorzugt sind Carbodiimide der nachstehenden Strukturformel II: 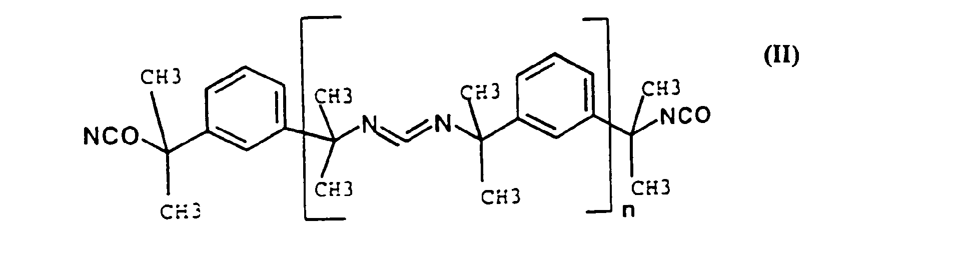 in der n eine Zahl von 1 bis 20, bevorzugt 2 bis 10 bedeutet.

Weiterhin bevorzugt sind Carbodiimide der Formeln I und II, die anstelle der NCO-Gruppe eine davon abgeleitete Gruppe, z.B. eine Urethan-, Harnstoff- oder Amid-Gruppe, tragen.

Die thermotrope Schicht kann die Komponente D zusätzlich zu den monomeren Photoinitiatoren und/oder den einpolymerisierten Photoinitiator-Comonomeren enthalten. Vorzugsweise enthält die thermotrope Schicht jedoch entweder nur monomere oder einpolymerisierte Photoinitiatoren oder nur reaktive Vernetzer. Wegen des geringeren apparativen Aufwands ist die reaktive Vernetzung gegenüber der UV-Vernetzung bevorzugt.

Somit enthält die thermotrope Schicht in einer besonders bevorzugten Ausführungsform der Erfindung die Komponenten A und B ohne einpolymerisierte Photoinitiator-Comonomere, daneben die Komponente D, gegebenenfalls die Komponente E und nicht die Komponente C.

Die thermotrope Schicht kann ferner bis zu 20 Gew.-%, bevorzugt 0,1 bis 15 Gew.-%, besonders bevorzugt 0,5 bis 10 Gew.-% übliche Zusatzstoffe als Komponente E enthalten. Übliche Zusatzstoffe sind beispielsweise Weichmacher, Farbstoffe, Pigmente, Antikorrosiva, Verarbeitungshilfsmittel und Rheologieadditive. Zur Verbesserung der Polymerstabilität können auch noch übliche Stabilisatoren gegen photochemischen, oxidativen, thermischen oder sonstigen Abbau zugesetzt werden.

Die gewünschte Entmischung der thermotropen Polymerblends bei ihrer Anwendung als Sonnenschutzfolie erschwert deren Verarbeitung. Es wurde gefunden, daß eine weitgehende Entmischung in Verarbeitungsmaschinen, wie einem Extruder, nicht nur durch erhöhte Temperatur auftreten kann, sondern auch durch Scher- und/oder Dehnströmungen in diesen Maschinen. Der Zusatz von Weichmachern kann diese Scher- bzw. Dehnemfindlichkeit reduzieren. Geeignete Weichmacher sind Ester der Phthalsäure, der Adipinsäure, der Azelainsäure und der Sebacinsäure. Geeignete Alkoholkomponenten dieser Ester sind n-, iso- und tert.-C₁-C₂₀-Alkanole und C₁-C₁₀-Diole. Weiterhin sind Polyester von aliphatischen Dicarboxylsäuren geeignet. Beispiele für geeignete Weichmacher sind Dimethylphthalat, Diethylphthalat, Dipropylphthalat, Dibutylphthalat, Dipentylphthalat, Dihexylphthalat, Dioctylphthalat, Diethylhexylphthalat, Diisooctylphthalat, Dibutyladipat, Dihexyladipat und Diethylhexyladipat. Bevorzugte Weichmacher für Styrolcopolymere enthaltende Polymerblends sind die Ester der Phthalsäure, z. B. Dibutylphthalat.

Die mit dem erfindungsgemäßen Verfahren hergestellten Folien bzw. Folienverbunde können mehrere thermotropen Schichten enthalten. Bevorzugt enthalten sie nur eine thermotrope Schicht.

Die mit dem erfindungsgemäßen Verfahren hergestellten Folienverbunde enthalten neben der thermotropen Schicht eine transparente Trägerschicht und/oder Deckschicht, bevorzugt eine Trägerschicht und eine Deckschicht. Träger- und Deckschichten bestehen aus transparenten Polymeren, welche ausgewählt sind aus Polyethylen-, Polypropylen-, Polyethylen-Vinylacetat-Copolymer-, Polyvinylchlorid- und anderen Polyolefinfolien.

Vorzugsweise bestehen die Träger- und Deckschichten aus Polyethylen, dem zur Einstellung einer verbesserten Elastizität Copolymere aus Ethylen und Vinylacetat zugesetzt werden.

Träger- und Deckschicht können gleich oder verschieden sein, bevorzugt sind sie gleich. Die mit dem erfindungsgemäßen Verfahren hergestellten Folienverbunde können zwischen Trägerschicht, thermotroper Schicht und Deckschicht zusätzliche Zwischenschichten enthalten.

Solche zusätzlichen Zwischenschichten sind beispielsweise haftvermittelnde Schichten, welche die Haftung zwischen der thermotropen Mittelschicht und der Träger- bzw. Deckschicht erhöhen. Solche haftvermittelnden Schichten sind vorzugsweise aufgebaut aus Homo- oder Copolymeren, die sowohl zur thermotropen Mittelschicht als auch zur Träger- und Deckschicht eine spezifische Wechselwirkung aufweisen. Spezifische Wechselwirkungen können beispielsweise durch van-der-Waals-Wechselwirkungen, Salzbildung, Wasserstoffbrückenbindungen, Komplexbildung, pi-Elektronenwechselwirkung oder durch polare Wechselwirkung ausgebildet werden. Vorteilhaft können Copolymere eingesetzt werden, die sowohl Comonomere der Träger- und Deckschicht als auch der thermotropen Mittelschicht enthalten.

Die Dicke der haftvermittelnden Schichten liegt üblicherweise bei 0,5 bis 10 µm, vorzugsweise bei 1 bis 2 µm.

Die Folien bzw. Folienverbunde werden nach dem erfindungsgemäßen Verfahren wie folgt hergestellt:

In einem ersten Schritt (i) wird eine innige Mischung, enthaltend
10 bis 98 Gew.-%, bevorzugt 20 bis 80 Gew.-%, besonders bevorzugt 30 bis 70 Gew.-% der Mischung der Komponenten A, B und gegebenfalls C und/oder E
und
2 bis 90 Gew.-%, bevorzugt 20 bis 80 Gew.-%, besonders bevorzugt 30 bis 70 Gew.-% eines Lösungsmittels, in dem zumindest die Komponenten A und B löslich sind,
hergestellt. Die Komponenten A und B sind in dem eingesetzten Lösungsmittel löslich, das heißt sie bilden mit diesem eine homogene Mischung. Die Komponenten C, D und E sind in diesem löslich oder dispergierbar. Bevorzugte Lösungsmittel sind Cyclohexan, Methylcyclohexan, Butylacetat, Glykolether, Cyclopentan, Methylcyclohexanon, Cyclohexanon, Dimethylcarbonat, Dioxan, Methylpropylketon, Diethylketon, Diethylcarbonat, Diethylether, Benzol und Chloroform.

Besonders bevorzugt sind Ethylacetat, Methylethylketon, Tetrahydrofuran und Toluol.

Der Mischvorgang kann in üblichen Mischvorrichtungen durchgeführt werden. Beispiele sind Rührkessel, gegebenenfalls aber auch kontinuierliche Mischeinrichtungen, wie statische und dynamische Mischer in Rohrleitungen.

In Gegenwart des Lösungsmittels wird die untere kritische Entmischungstemperatur der Polymermischung auf einen Wert oberhalb der Verarbeitungstemperatur während des Mischvorgangs angehoben. Im allgemeinen wird die Entmischungstemperatur um 10 bis 120 °C, bevorzugt 20 bis 80 °C angehoben. Die Verarbeitungstemperatur während des Mischvorgangs beträgt im allgemeinen 0 bis 100 °C, bevorzugt 20 bis 80°C.

In einem zweiten Schritt (ii) wird das Lösungsmittel entfernt, wobei eine innige Polymermischung aus den Komponenten A, B und gegebenenfalls C und/oder D und/oder E gebildet wird. Bevorzugt wird eine homogene Polymermischung aus den Komponenten A und B gebildet, welche die Komponenten C, D und E gelöst oder dispergiert enthalten kann. Das Lösungsmittel kann nach verschiedenen Verfahren entfernt werden, beispielsweise durch Wirbelschichttrocknung, durch Sprühtrocknung, durch Destillation im Batch oder in einem Dünnschichtverdampfer, durch Entspannen im Vakuum, durch Flashentgasung oder Entgasung in einem geeigneten Extruder. Das letztgenannte, auch als Extruderentgasung bezeichnete Verfahren bietet sich zur Verarbeitung hochviskoser Polymermischungen an.

In einer bevorzugten Ausführungsform der Erfindung wird zur Verarbeitung hochviskoser Polymermischungen das Lösungsmittel durch Entgasung in einem Entgasungsextruder entfernt. Die Extruderentgasung kann mit anderen Verfahren zur Lösungsmittelentfernung kombiniert werden. Beispielsweise kann vor der Extruderentgasung eine Destillation im Batch oder Dünnschichtverdampfer, bei Entspannen im Vakuum oder einer Flashentgasung durchgeführt werden.

In einem dritten Schritt (iii) wird die in Schritt (ii) erhaltene innige Polymermischung aufgeschmolzen. Das Aufschmelzen der innigen Polymermischung kann beispielsweise in einem Extruder oder einer Faßschmelzeinrichtung erfolgen. Das Aufschmelzen kann gleichzeitig mit der Entfernung des Lösungsmittels oder danach erfolgen.

In einer bevorzugten Ausführungsform der Erfindung erfolgt das Aufschmelzen der Polymermischung in einem Extruder. Das Aufschmelzen in einem Extruder ist bei hochviskosen Polymermischungen bevorzugt. Dabei kann das Aufschmelzen gleichzeitig mit der Lösungsmittelentfernung in einem Entgasungsextruder erfolgen. Die hochviskose Polymermischung kann unmittelbar am Ausgang des Entgasungsextruders in Folienform gebracht werden oder aber nach Entfernung des Lösungsmittels in einen weiteren Extruder gefördert werden, oder am Ausgang des Entgasungextruders in einem Granulator in ein schüttfähiges Granulat geformt werden oder am Ausgang des Entgasungsextruders in ein Glattwandfaß gefördert werden, um es später mit einer Faßschmelzeinrichtung wieder in eine förderfähige Schmelze zu bringen.

In einer weiteren bevorzugten Ausführungsform der Erfindung erfolgt das Aufschmelzen der Polymermischung in einer Faßschmelzeinrichtung. Das Aufschmelzen in einer Faßschmelzeinrichtung ist bei niedrigviskosen Polymermischungen bevorzugt. Niedrigviskose Polymermischungen können im unvernetzten Zustand nicht zu lange bei hoher Temperatur gehalten werden, da es andernfalls zu irreversiblen Entmischungserscheinungen kommt. Bei einer Faßschmelzeinrichtung wird ein beheizter Stempel von oben in ein Faß mit glatter Wand (Glattwandfaß) gedrückt, wobei nur ein sehr geringer Teil der Polymermischung aufgeheizt wird. Der aufgeschmolzene Teil wird sofort weiterverarbeitet, wodurch eine weitgehende Entmischung verhindert wird. Zur Weiterverarbeitung wird die aufgeschmolzene Polymermischung beispielsweise in einen Extruder gefördert, in den ein reaktiver Vemetzer (Komponente D) eindosiert und in die niedrigviskose Polymermischung eingemischt werden kann. Die aufgeschmolzene, niedrigviskose Polymermischung kann auch unmittelbar in Folienform gebracht werden.

Gegebenenfalls wird nach dem Aufschmelzen der innigen Polymermischung in einem vierten Schritt (iv) der reaktive Vemetzer (Komponente D) zugegeben.

Vorzugsweise liegt bei der Herstellung von Folienverbunden die Viskosität der einzelnen Polymerschichten nach ASTM-Methode D1238 (190 °C, 2,16 kg) im Bereich von 0,05 bis 35 g/10min.

Gegebenenfalls werden in einem vierten Schritt (iv) die monomeren Vernetzer (Komponente C) und/oder der reaktive Vemetzer (Komponente D) und/oder die üblichen Hilfsstoffe (Komponente E) zugegeben. Die Komponenten C, D und E können, bevor die Polymermischung in Folienform gebracht wird, zu einem beliebigen Zeitpunkt gemeinsam oder getrennt zugegeben werden. Beispielsweise können die Komponenten C und E vollständig oder teilweise mit den Komponenten A und B in dem Lösungsmittel gelöst oder dispergiert werden. Sie können auch vollständig oder teilweise nach Entfernung des Lösungsmittels während oder nach dem Aufschmelzen der innigen Polymermischung zugegeben werden. Vorzugsweise wird die Komponente E bereits mit den Komponenten A und B in dem Lösungsmittel gelöst oder dispergiert. Die Komponente C wird vorzugsweise bereits mit den Komponenten A und B in dem Lösungsmittel gelöst oder dispergiert.

Reaktive Vernetzer werden vorzugsweise dann zugegeben, wenn bei der Herstellung von Folienverbunden die Viskosität der thermotropen Polymermischung bei der Verarbeitungstemperatur der Viskosität der die Träger- bzw. Deckschicht bildenden Polymere angepaßt werden muß. Dies ist häufig bei thermotropen Polymermischungen aus mindestens einem niedermolekularen Polymeren, welche nur eine niedrige Viskosität aufweisen, der Fall, beipielsweise aus Polymeren mit einem Molekulargewicht Mₙ im Bereich von 1000 bis 50 000. Die Einstellung der Viskosität kann auch durch eine entsprechende Einstellung des Molekulargewichts einer oder beider Polymerkomponenten der thermotropen Polymermischung erfolgen. Bei der Verarbeitung hochmolekularer, hochviskoser Polymermischungen kann oft auf einen reaktiven Vemetzer verzichtet werden. Dies ist häufig bei Polymermischungen aus Polymeren mit einem Molekulargewicht im Bereich von 50 000 bis 1 000 000 der Fall.

In einem fünften Schritt (v) wird die Mischung aus den Komponenten A, B und gegebenenfalls C, D und/oder E allein zu einer thermotropen Folie oder gemeinsam mit der Trägerschicht und/oder der Deckschicht zu einem thermotropen Folienverbund geformt. Die Formgebung kann durch Extrusion unter Verwendung einer Flachdüse, durch Blasfolienextrusion oder einfaches Folienblasen unter Verwendung einer Blasdüse bzw. durch Coextrusion oder Blasfoliencoextrusion unter Verwendung entsprechender Mehrschlitzdüsen hergestellt werden.

In einer Ausführungsform des erfindungsgemäßen Verfahrens wird die innige Polymermischung in einer Faßschmelzvorrichtung aufgeschmolzen und direkt in eine Flachdüse oder eine Blasdüse gefördert und zu einer einschichtigen (Mono-)Folie verarbeitet.

In einer weiteren Ausführungsform des erfindungsgemäßen Verfahrens wird die innige Polymermischung in einer Faßschmelzvorrichtung aufgeschmolzen, in einen Extruder gefördert, dort mit einem reaktiven Vernetzer vermischt und unter Verwendung einer Mehrschicht-Flachdüse oder einer Mehrschicht-Blasdüse gemeinsam mit einer Deck- und einer Trägerschicht, durch Coextrusion bzw. Blasfoliencoextrusion zu einer Mehrschichtfolie verarbeitet.

In einer weiteren Ausführungsform des erfindungsgemäßen Verfahrens wird die innige Polymermischung in einem Extruder aufgeschmolzen und unter Verwendung einer Flachdüse oder eine Blasdüse durch Extrusion bzw. Blasfolienextrusion zu einer einschichtigen (Mono-)Folie verarbeitet, oder gemeinsam mit einer Deck- und einer Trägerschicht unter Verwendung einer Mehrschicht-Flachdüse oder eine Mehrschicht-Blasdüse durch Coextrusion oder Blasfoliencoextrusion zu einer Mehrschichtfolie verarbeitet.

Mehrschichtfolien sind beispielsweise Dreischichtfolien aus einer thermotropen Mittelschicht, einer Träger- und einer Deckschicht. Zur Verbesserung der Haftung zwischen der Mittelschicht und der Träger- bzw. Deckschicht können zusätzliche haftvermittelnde Schichten eingeführt werden, so daß beispielsweise durch Coextrusion oder Blasfoliencoextrusion ein 5-schichtiger Verbund aus den beiden äußeren Schichten, den beiden haftvermittelnden Zwischenschichten und der thermotropen Mittelschicht erhalten wird.

Gegebenenfalls erfolgt in einem sechsten Schritt (vi) eine UV-Vemetzung der thermotropen Folie bzw. des thermotropen Folienverbunds.

Wegen des geringeren apparativen Aufwands erfolgt bevorzugt an Stelle der UV-Vemetzung eine reaktive Vernetzung, so daß der Schritt (vi) häufig entfällt.

Die mit dem erfindungsgemäßen Verfahren hergestellten Folien und Folienverbunde werden vorzugsweise als Landwirtschaftsfolien, beispielsweise als Abbdeckfolien zur Ernteverfrühung, oder als Gewächshausfolien verwendet. Gewächshausfolien werden beispielsweise als Flachfolien mit Breiten bis ca. 4 m durch Coextrusion durch eine Flachdüse oder vorzugsweise als Blasfolien mit einem Umfang von ca. 4 bis 18 m erhalten. daneben können die mit dem erfindungsgemäßen Verfahren hergestellten Folien und Folienverbunde als Sonnenschutzfolien in allen Bauanwendungen zur Schattierung von Fenstern, transparenten Dächern und Oberlichtern und Wänden aus Glas oder Kunststoff, transparenter Wärmedämmung, Sonnenkollektoren und zur Schattierung von Kraftfahrzeugen verwendet werden.

Die Erfindung wird durch das nachfolgende Beispiel näher erläutert.

### Beispiel

58 Teile eines molekular einheitlichen Copolymeren aus 91,4 Mol-% Styrol, 5,6 Mol-% Hydroxyethylmethacrylat und 3 Mol-% Allylmethacrylat mit einem Molekulargewicht von 290 000 werden 50%ig in Toluol gelöst und mit 42 Teilen eines Copolymeren aus 80 % Propylenoxid und 20 % Butylenoxid mit einem Molekulargewicht von 4 200 homogen gemischt. Diese Mischung wird auf einem Entgasungsextruder vom Lösungsmittel wieder befreit und in eine granulare Form gebracht. Das Polymerblend-Granulat wird in einem Extruder mit einer Blasfoliendüse von 10 cm Durchmesser aufgeschmolzen und bei 140°C zu einer einschichtigen Folie geblasen. Die Folie verläßt die Blasfoliendüse im entmischten Zustand, erscheint weiß und wird nach einigen Minuten wieder klar. Die Trübungstemperatur der Folie liegt bei 30°C.

## Patentansprüche

1. Verfahren zur Herstellung thermotroper (Mono-)Folien oder Folienverbunde enthaltend mindestens eine thermotrope Schicht, die gebildet wird aus
a) 5 bis 95 Gew.-% eines Polymeren als Komponente A,
b) 5 bis 95 Gew.-% eines von A verschiedenen Polymeren mit kleinerem Brechungsindex als A als Komponente B, wobei eine molekulare Mischung der Komponenten A und B eine Trübungstemperatur besitzt, unterhalb derer eine einphasige, transparente Mischung vorliegt und oberhalb derer Entmischung zu den Komponenten A und B stattfindet,
wobei die Komponenten A und/oder B jeweils bis zu 15 Mol-% Photoinitiator-Comonomere einpolymerisiert enthalten können,
und gegebenenfalls
c) 0 bis 10 Gew.-% eines monomeren Photoinitiators als Komponente C,
d) 0 bis 20 Gew.-% eines reaktiven Vernetzers als Komponente D
und/oder
e) 0 bis 20 Gew.-% üblichen Zusatzstoffen wie Weichmacher, Farbstoffe, Pigmente, Stabilisatoren, Verarbeitungshilfsmittel, Rheologieadditive als Komponente E,
und gegebenenfalls eine Trägerschicht und/oder eine Deckschicht sowie gegebenenfalls zusätzliche Zwischenschichten,
mit den Schritten
i) Herstellen einer innigen Mischung enthaltend
10 bis 98 Gew.-% einer Mischung der Komponenten A, B und gegebenenfalls C und/oder E
und
2 bis 90 Gew.-% eines Lösungsmittels, in dem die Komponenten A und B löslich sind,
ii) Entfernung des Lösungsmittels, wobei eine innige Polymermischung aus den Komponenten A und B und gegebenenfalls C und/oder E gebildet wird,
iii) Aufschmelzen der innigen Polymermischung aus Schritt (ii) während oder nach der Entfernung des Lösungsmittels,
iv) gegebenenfalls Zugabe der Komponenten C und/oder D und/oder E zu einem beliebigen Zeitpunkt,
v) Formung der Mischung aus den Komponenten A, B und gegebenenfalls C, D und/oder E zu einer thermotropen (Mono-)Folie oder gemeinsam mit der Trägerschicht und/oder der Deckschicht und gegebenenfalls der zusätzlichen Zwischenschichten zu einem thermotropen Folienverbund, und
vi) gegebenenfalls UV-Vemetzung der thermotropen Folie oder des thermotropen Folienverbunds.

2. Verfahren nach Anspruch 1, **dadurch gekennzeichnet, daß** die molekulare Mischung der Komponenten A und B eine Trübungstemperatur < 150 °C aufweist und der Brechungsindexunterschied der Komponenten A und B > 0,01 ist.

3. Verfahren nach einem der Ansprüche 1 oder 2, **dadurch gekennzeichnet, daß**
(a) Komponente A ein Polymer ist, enthaltend als wiederkehrende Struktureinheit eine Struktureinheit ausgewählt aus carbocyclischen oder heterocyclischen gesättigten oder ungesättigten nicht-aromatischen cyclischen Struktureinheiten und carbocyclischen oder heterocyclischen mono- oder polycyclischen aromatischen Struktureinheiten, wobei das Polymere spezifische Wechselwirkungen zu den Polymeren der Komponente B ausbilden kann, und
(b) Komponente B ein Polymer ist ausgewählt aus Poly(meth)acrylsäurealkylester mit 1-20 C-Atomen im Alkylrest, Poly-C₁-C₂₀-Alkylvinylethern, Polyvinylether mit C₁-C₆ Alkylenoxid-Seitenketten und Polyalkylenoxiden.

4. Verfahren nach einem der Ansprüche 1 bis 3, **dadurch gekennzeichnet, daß** das Lösungsmittel ausgewählt ist aus Cyclohexan, Methylcyclohexan, Butylacetat, Glykolether, Cyclopentan, Ethylacetat, Methylethylketon, Tetrahydrofuran und Toluol.

5. Verfahren nach einem der Ansprüche 1 bis 4, **dadurch gekennzeichnet, daß** die thermotrope Schicht aus den Komponenten A, B, D und gegebenenfalls E gebildet wird.

6. Verfahren nach einem der Ansprüche 1 bis 4, **dadurch gekennzeichnet, daß** die thermotrope Schicht aus den Komponenten A, B, C und gegebenenfalls E gebildet wird.

7. Verfahren nach einem der Ansprüche 1 bis 4, **dadurch gekennzeichnet, daß** die thermotrope Schicht aus den Komponenten A, B und gegebenenfalls E gebildet wird.

8. Verfahren nach einem der Ansprüche 1 bis 7, **dadurch gekennzeichnet, daß** das Aufschmelzen der innigen Polymermischung im Schritt (iii) in einem Extruder oder einer Faßschmelzeinrichtung erfolgt.

9. Verfahren nach einem der Ansprüche 1 bis 8 zur Herstellung eines thermotropen Folienverbundes mit einer Trägerschicht und einer Deckschicht, die gleich oder verschieden sein können, aus einem Polymeren ausgewählt aus Polyethylen, Polypropylen, Polyethylen-Vinylacetat-Copolymer, Polyvinylchlorid und andere Polyolefinen.

10. Verfahren nach einem der Ansprüche 1 bis 9, **dadurch gekennzeichnet, daß** die Formung im Schritt (v) durch (Co)extrusion unter Verwendung einer Flachdüse oder durch Blasfolien(co)extrusion unter Verwendung einer Blasdüse erfolgt.

## Claims

1. A process for producing thermotropic (mono)films or composite films comprising at least one thermotropic layer, which is formed from
a) from 5 to 95% by weight of a polymer as component A,
b) from 5 to 95% by weight of a polymer other than A and with a refractive index smaller than that of A, as component B, where a molecular mixture of components A and B has a cloud point below which a single-phase transparent mixture is present and above which separation into components A and B takes place,
where each of components A and/or B may comprise, incorporated into the polymer, up to 15 mol% of photoinitiator comonomers,
and, if appropriate,
c) from 0 to 10% by weight of a monomeric photoinitiator as component C,
d) from 0 to 20% by weight of a reactive crosslinker as component D
and/or
e) from 0 to 20% by weight of customary additives, such as plasticizers, dyes, pigments, stabilizers, processing aids, rheology additives, as component E,
and, if appropriate, comprising a backing layer and/or an outer layer, and also, if appropriate, additional intermediate layers,
in which the steps are
i) preparing an intimate mixture comprising
from 10 to 98% by weight of a mixture of components A, B and, if appropriate, C and/or E,
and
from 2 to 90% by weight of a solvent in which components A and B are soluble,
ii) removing the solvent, whereupon an intimate polymer mixture made from components A and B and, if appropriate, C and/or E is formed,
iii) melting the intimate polymer mixture from step (ii) during or after removal of the solvent,
iv) if appropriate, adding components C and/or D and/or E at any desired juncture,
v) molding the mixture made from components A, B and, if appropriate, C, D and/or E to give a thermotropic (mono)film, or together with the backing layer and/or the outer layer and, if appropriate, the additional intermediate layers to give a thermotropic composite film, and
vi) if appropriate, UV-crosslinking the thermotropic film or the thermotropic composite film.

2. The process according to claim 1, wherein the molecular mixture of components A and B has a cloud point < 150°C and the difference between the refractive indices of components A and B is > 0.01.

3. The process according to claim 1 or 2, wherein
(a) component A is a polymer cmprising as repeat unit a structural unit selected from the group consisting of carbocyclic or heterocyclic saturated or unsaturated nonaromatic cyclic structural units and of carbocyclic or heterocyclic mono- or polycyclic aromatic structural units, and the polymer may develop specific interactions with respect to the polymers of component B, and
(b) component B is a polymer selected from the group consisting of poly(meth)acrylic acid alkyl esters having 1-20 carbon atoms in the alkyl radical poly-C₁-C₂₀-alkyl esters of (meth)acrylic acid, C₁-C₂₀-alkyl vinyl ethers, polyvinyl ether having C₁-C₆-alkylene oxide side chains, and of polyalkylene oxides.

4. The process according to any one of claims 1 to 3, wherein the solvent has been selected from the group consisting of cyclohexane, methylcyclohexane, butyl acetate, glycol ethers, cyclopentane, ethyl acetate, methyl ethyl ketone, tetrahydrofuran and toluene.

5. The process according to any one of claims 1 to 4, wherein the thermotropic layer is formed from components A, B, D and, if appropriate, E.

6. The process according to any one of claims 1 to 4, wherein the thermotropic layer is formed from components A, B, C and, if appropriate, E.

7. The process according to any one of claims 1 to 4, wherein the thermotropic layer is formed from components A, B and, if appropriate, E.

8. The process according to any one of claims 1 to 7, wherein the melting of the intimate polymer mixture in step (iii) takes place in an extruder or a bulkmelter.

9. The process according to any one of claims 1 to 8 for producing a thermotropic composite film with a backing layer and with an outer layer, which may be identical or different, from a polymer selected from the group consisting of polyethylene, polypropylene, polyethylene-vinyl acetate copolymer, polyvinyl chloride and other polyolefins.

10. The process according to any one of claims 1 to 9, wherein the molding in step (v) takes place by (co)extrusion using a flat die, or by blown film (co)extrusion using a blown-film die.

## Revendications

1. Procédé pour la fabrication de films (monocouches) ou de films composites contenant au moins une couche thermotrope, qui est constituée de :
a) 5 à 95 % en poids d'un polymère comme composant A,
b) 5 à 95 % en poids d'un polymère différent de A avec un indice de réfraction plus petit que A, comme composant B, sachant qu'un mélange moléculaire des composants A et B possède une température de turbidité en dessous de laquelle on est en présence d'un mélange monophasé transparent et au-dessus de laquelle s'effectue une ségrégation en les composants A et B,
les composants A et/ou B pouvant contenir chacun jusqu'à 15 % en mole de co-monomères photo-initiateurs polymérisés avec eux,
et le cas échéant
c) 0 à 10 % en poids d'un photo-initiateur monomère comme composant C,
d) 0 à 20 % en poids d'un réticulant réactif comme composant D et/ou
e) 0 à 20 % en poids d'additifs habituels tels des plastifiants, des colorantes, des pigments, des stabilisateurs, des auxiliaires de transformation, des additifs rhéologiques, comme composant E,
et, le cas échéant, une couche porteuse et/ou une couche de couverture, ainsi que, le cas échéant, des couches intermédiaires supplémentaires,
avec les étapes de
i) préparation d'un mélange intime contenant
10 à 98 % en poids d'un mélange des composants A, B, et le cas échéant C et/ou E
et
2 à 90 % en poids d'un solvant dans lequel les composants A et B sont solubles,
ii) élimination du solvant, un mélange intime de polymères des composants A et B, et le cas échéant C et/ou E étant formé,
iii) fusion du mélange intime de polymères de l'étape (ii) pendant ou après l'élimination du solvant,
iv) le cas échéant, addition des composants C et/ou D et/ou E à un instant quelconque,
v) moulage du mélange des composants A, B et le cas échéant C, D et/ou E pour donner un film (monocouche) thermotrope ou, ensemble avec la couche porteuse et/ou la couche de couverture et le cas échéant des couches intermédiaires supplémentaires, un film composite thermotrope, et
vi) le cas échéant, réticulation aux UV du film thermotrope ou du film composite thermotrope.

2. Procédé selon la revendication 1, **caractérisé en ce que** le mélange moléculaire des composants A et B présente une température de turbidité < 150 °C et **en ce que** la différence des indices de réfraction des composants A et B est > 0,01.

3. Procédé selon l'une quelconque des revendications 1 ou 2, **caractérisé en ce que** :
a) le composant A est un polymère, contenant comme unité structurelle qui se répète une unité structurelle choisie parmi des unités structurelles cycliques non aromatiques, carbocycliques ou hétérocycliques, saturées ou insaturées, et des unités structurelles aromatiques carbocycliques ou hétérocycliques, monocycliques- ou polycycliques, le polymère pouvant former des interactions spécifiques avec les polymères du composant B, et
(b) le composant B est un polymère, choisi parmi des esters poly(méth)acryliques d'alkyle avec 1 à 20 atomes de carbone dans le radical alkyle, des éthers poly(alkyle en C₁ à C₂₀)vinyliques, des éthers polyvinyliques avec des branches latérales d'oxyde d'alkylène en C₁ à C₆ et des poly(oxydes d'alkylène).

4. Procédé selon l'une quelconque des revendications 1 à 3, **caractérisé en ce que** le solvant est choisi parmi le cyclohexane, le méthylcyclohexane, l'acétate de butyle, l'éther glycolique, le cyclopentane, l'acétate d'éthyle, la méthyléthylcétone, le tétrahydrofuranne et le toluène.

5. Procédé selon l'une quelconque des revendications 1 à 4, **caractérisé en ce que** la couche thermotrope est formée à partir des composants A, B, D et le cas échéant E.

6. Procédé selon l'une quelconque des revendications 1 à 4, **caractérisé en ce que** la couche thermotrope est formée à partir des composants A, B, C et le cas échéant E.

7. Procédé selon l'une quelconque des revendications 1 à 4, **caractérisé en ce que** la couche thermotrope est formée à partir des composants A, B et le cas échéant E.

8. Procédé selon l'une quelconque des revendications 1 à 7, **caractérisé en ce que** la fusion du mélange intime de polymères dans l'étape (iii) s'effectue dans une extrudeuse ou dans un dispositif à fût de fusion.

9. Procédé selon l'une quelconque des revendications 1 à 8 pour la fabrication d'un film composite thermotrope avec une couche porteuse et une couche de couverture, qui peuvent être identiques ou différentes, à partir d'un polymère choisi parmi le polyéthylène, le polypropylène, le copolymère polyéthylène-acétate de vinyle, le poly(chlorure de vinyle) et d'autres polyoléfines.

10. Procédé selon l'une quelconque des revendications 1 à 9, **caractérisé en ce que** le moulage à l'étape (v) s'effectue par (co-)extrusion moyennant l'utilisation d'une filière plate ou par (co-)extrusion de films soufflés moyennant l'utilisation d'une filière de soufflage.
